**Europäisches Patentamt**

**European Patent Office**

**Office européen des brevets**

(19)

(11) **EP 0 826 416 A1**

(12) **EUROPEAN PATENT APPLICATION**
published in accordance with Art. 158(3) EPC

(43) Date of publication:
**04.03.1998 Bulletin 1998/10**

(21) Application number: **95925178.6**

(22) Date of filing: **18.04.1995**

(51) Int. Cl.$^6$: **B01J 19/00**

(86) International application number:
**PCT/RU95/00071**

(87) International publication number:
**WO 96/33011 (24.10.1996 Gazette 1996/47)**

(84) Designated Contracting States:
**AT BE CH DE DK ES FR GB GR IE IT LI LU MC NL PT SE**

(72) Inventor:
**Selivanov, Nikolai Ivanovich**
**Ekaterinburg, 620027 (RU)**

(71) Applicant:
**Selivanov, Nikolai Ivanovich**
**Ekaterinburg, 620027 (RU)**

(74) Representative:
**Wagner, Karl H., Dipl.-Ing. et al**
**WAGNER & GEYER**
**Patentanwälte**
**Gewürzmühlstrasse 5**
**80538 München (DE)**

(54) **METHOD OF CONDITIONING HYDROCARBON LIQUIDS AND AN APPARATUS FOR CARRYING OUT THE METHOD**

(57)     Method and device (FIG. 1) for conditioning of hydrocarbon fluids before their fractioning by means of mechanical vibrations comprise the supply of fluid into the space (1) of the rotating working wheel (2), the discharge of fluid into the circular chamber (4), formed by the working wheel and the stator (7) through a series of outlet openings (8), and outflow of fluid. During this, preferred empirical relationships are observed:

$$R = 1.1614 \ K \ (mm),$$

$$\Delta R = 1.1614 \ B \ (mm) \ \text{and}$$

$$n = 3.8396 \ K^{-1.5} \cdot 10^6 \ (r.p.m.), \ \text{where}$$

R     is the radius of the peripheral cylindrical surface of the working wheel,
ΔR    is the radial size of the circular chamber,
n     is the frequency of the working wheel rotation,
K     is the number of the outlet openings of the working wheel,
B     is the integer in the range of 1 ... K/5.

**(Cont. next page)**

FIG. 3

**Description**

BACKGROUND OF THE INVENTION

The present invention relates to technology of preparation of hydrocarbon fluids for their further processing and directly deals with the method and device for preliminary conditioning of hydrocarbon fluids before their further fractioning, effected by processing with the help of mechanical action.

From the state of art, of a common knowledge are methods of preliminary conditioning of hydrocarbon liquid stock before its fractioning, effected by processing with the help of mechanical action, in particular, by preliminary filtering from undesirable inclusions. Such processing facilitates the process of subsequent fractioning, but has no influence either on the physical properties of the initial hydrocarbon stock or semi-product, nor on the output of intermediary or finite fractions.

From the state of art is also known a method of fluid processing by means of mechanical vibrations (International Application No. PCT/RU92/00194 dated 1992), which includes the supply of fluid to be processed into the space of the rotating working wheel; the discharge of the fluid from the space of the working wheel through a series of outlet openings made on the peripheral cylindrical surface thereof; intake of the fluid into the stator space through at least one inlet opening made in the stator concentric surface, adjoining the peripheral cylindrical surface of the working wheel with a minimum clearance; whereby a periodical abrupt interruptions of the fluid flowing the output openings of the working wheel are effected, exciting mechanical vibrations therein in the sonic or ultrasonic ranges.

The device embodying the described method of fluid processing comprises a rotor, including a shaft running in bearings; a working wheel connected to a shaft and made as a disc with a peripheral annular wall having cylindrical inner and outer surfaces, wherein a series of openings is made for fluid passage, equidistant along the circumference; a stator containing the working wheel, said stator having an intake opening for fluid supply and a discharge opening for fluid outflow and two concentric walls adjoining the peripheral annular wall of the working wheels at both sides with a minimum clearance; in both concentric walls of the stator openings are made for fluid passage, lying in the location plane of the series of openings of the working wheel.

As applied to hydrocarbon fluids, the above-described method and device for fluid processing does not likewise influence their physical properties, with the exception of certain heating, nor the output of intermidiary and finite products of subsequent fractioning.

SUMMARY OF THE INVENTION

The present invention is aimed at solving the problem of producing, on the basis of the prior art and own research, such a method of conditioning of hydrocarbon fluids before their subsequent fractioning and such a device for embodiment thereof that would influence the physical properties of hydrocarbon fluid in such a manner as to increase the output of light fractioning products.

This problem is solved, according to the invention, by processing the fluid with the help of mechanical action thereon of the process of rotary motion with a definite linear velocity along a definite radius of rotation with superimposition of vibratory process of a definite frequency.

For this purpose, in the basic embodiment of the method of fluid conditioning are provided: the supply of the fluid to be processed into the space of the rotating working wheel; the discharge of the fluid to be processed from the space of the working wheel into a circular chamber formed by the peripheral cylindrical surface of the working wheel and the concentric surface of the stator through a series of outlet openings arranged on the peripheral cylindrical surface of the working wheel and equidistant along the circumference; the discharge of the fluid from the circular chamber through at least one discharge opening. In this case the radius $R$ of the peripheral cylindrical surface of the working wheel and the rotation frequency $n$ thereof are determined by the number $K$ of the outlet openings of the working wheel in the range according to empirical relationships

$$R = (1.05 \ldots 1.28) \, K \; (mm) \; \text{and}$$

$$n = (3.6 \ldots 4.1) \, K^{-1.5} \cdot 10^6 \; (r.p.m.).$$

Beyond the limits of said ranges of parameters the obtainable effect of fluid conditioning, as has been experimentally established, is expressed in an insufficient degree.

In the most preferred embodiment of the method of fluid conditioning the radius $R$ and the rotation frequency $n$ of the working wheel are determined unambiguously by the selected number $K$ of the outlet openings thereof according to empirical relationships

$$R = 1.1614 \ K \ (mm) \ \text{and}$$

$$n = 3.8396 \ K^{-1.5} \cdot 10^6 \ (r.p.m.).$$

In another preferred embodiment of the method of fluid conditioning the discharge of the fluid to be processed from the circular chamber formed by the peripheral cylindrical surface of the working wheel and concentric surface of the stator is effected through discharge openings arranged of the concentric surface of the stator, which are sequentially arranged opposite to the outlet openings of the working wheel in the course of rotation thereof.

In the described basic embodiment of the method of conditioning of hydrocarbon fluids in said ranges of selection of parameters, as has been set experimentally, such an influence on fluid physical properties is fundamentally achieved that at its ensuing fractioning the output of most valuable low-boiling fractions essentially increases, namely, to such an extent that it is possible to speak about a rather efficient practical utilization. This effect can be explained, not pretending to an exhaustive analysis of internal physical processes, by destructive transformation of inner bonds of fluid at a molecular level taking place as a result of initiating influence of mechanical action on the fluid at certain critical frequencies and harmonics thereof. In the most preferred embodiment of the method of fluid conditioning, when said unambiguous values of parameters, determined experimentally, are chosen, the effect of favourable predisposition of hydrocarbon fluid to subsequent fractioning manifests itself at utmost. Another preferred embodiment of the method of fluid conditioning makes possible to improve the obtainable effect owing to a combined vibratory action exerted upon the fluid at first when the latter is discharged through the outlet openings of the working wheel, then when it is discharged from the circular chamber through the discharge openings made on the stator concentric surface.

The method of conditioning of hydrocarbon fluids, according to the invention, may be embodied only by means of the hereinafter described device, forming an integral part of the inventor's general intention and is not intended for use in other purposes.

The device for fluid conditioning in the basic embodiment thereof compises a rotor including a shaft running in bearings; at least one working wheel connected to the shaft and made as a disc with a peripheral annular wall having a cylindrical outer surface, wherein a series of outlet openings is made for fluid, equidistant along the circumference; a stator containing a working wheel having an intake opening for fluid supply and a discharge opening for fluid outflow; a space for the fluid to be processed, said space being formed by the disc and a peripheral annular wall of the working wheel and a stator wall with an intake opening and adjoining thereto; a circular chamber for the fluid to be processed, said circular chamber being restricted in the radial direction by the peripheral annular wall of the working wheel and the stator concentric wall and communicates with the discharge opening for the fluid outflow; the characteristic geometric dimensions of the working wheel and the circular chamber being:

$$R = (1.05 \ldots 1.28) \ K \ (mm), \ \text{where}$$

**K** is the selected number of the outlet openings of the working wheel,
**R** is the radius of the outer cylindrical surface of the peripheral annular wall of the working wheel, and

$$\Delta R = (1.05 \ldots 1.28) \ B \ (mm), \ \text{where}$$

**B** is the selected integer in the range of 1 ... K/2,
**ΔR** is the radial size of the circular chamber.

In the most preferred embodiment of the device for conditioning radius **R** and size **ΔR** constitute respectively:

$$R = 1.1614 \ K \ (mm),$$

$$\Delta R = 1.1614 \ B \ (mm), \ \text{where}$$

B is the selected integer in the range of 1 ... K/5.

In another preferred embodiment of the device for conditioning a stator has a space adjoining a concentric wall thereof for fluid intake from a circular chamber communicating with a discharge opening for fluid outflow; the stator space communicating with the circular chamber through the discharge openings made in the stator concentric wall in the arrangement plane of the working wheel outlet openings and equidistant along the circumference; the number of the discharge openings of the circular chamber is 1 ... K.

Other features of the invention will be seen from the following detailed description of embodiments thereof.

BRIEF DESCRIPTION OF THE DRAWINGS

Below the invention is described in more detail by examples of practical embodiment thereof with reference to schematic drawings, wherein:

FIG.1       is a longitudinal axial section of the device for fluid processing in the basic and most preferred embodiments;
FIG.2, 4    is a partial transverse section of the circular chamber;
FIG.3       is a longitudinal axial section of the device for fluid processing in one of the preferred embodiments.

DETAILED DESCRIPTION OF THE INVENTION

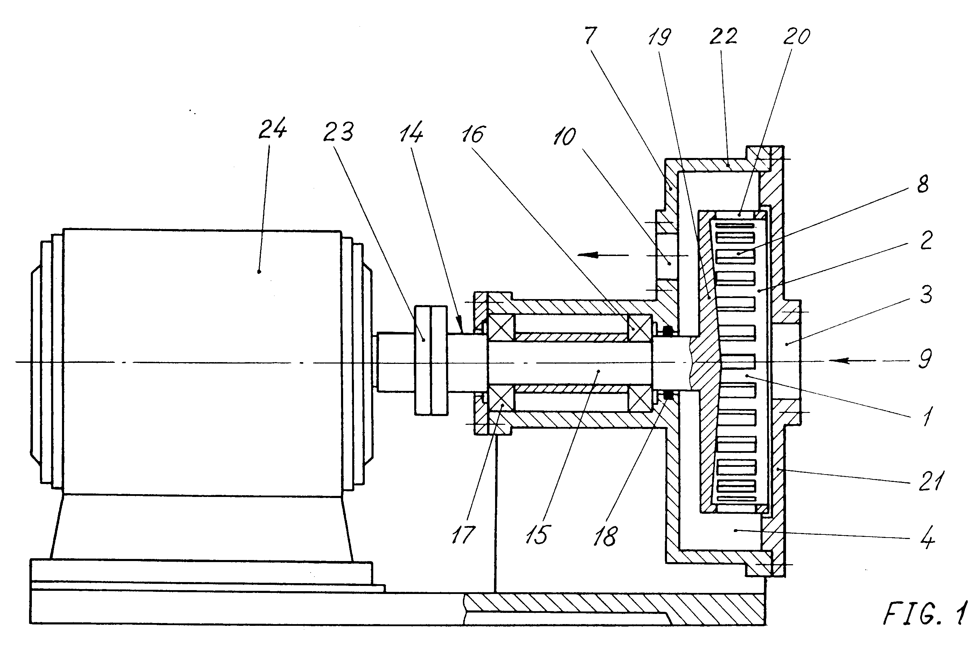

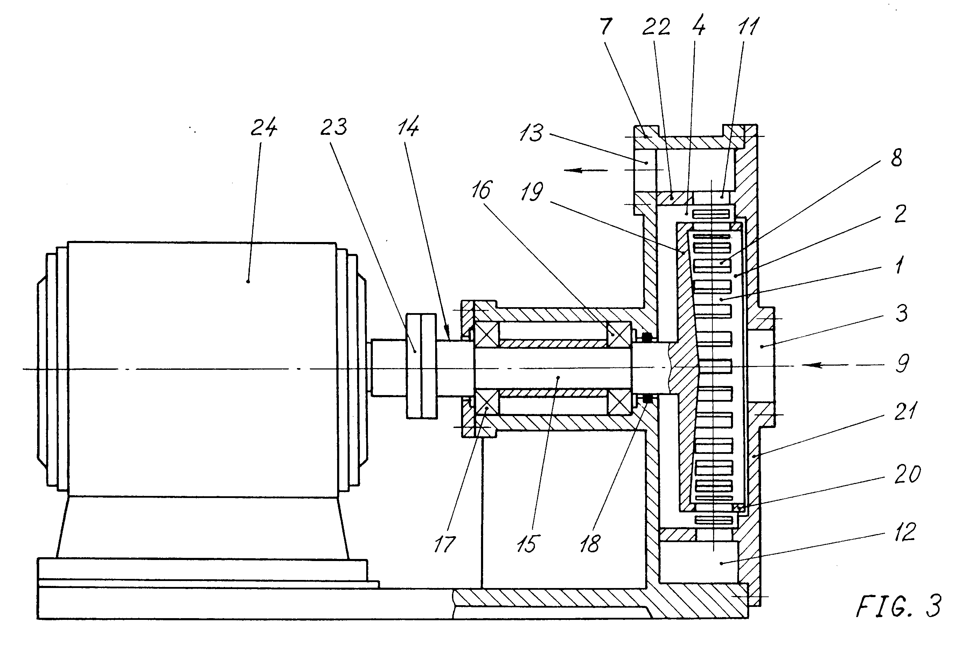

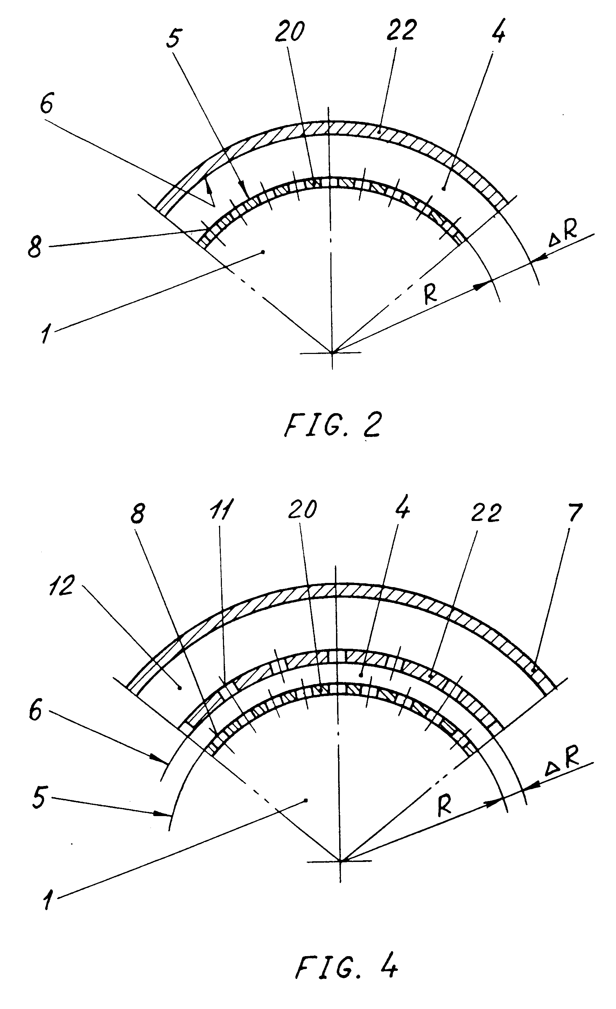

According to the basic embodiment (FIG.1, 2) of the method of conditioning of hydrocarbon fluid by processing with the help of mechanical action, the fluid to be processed is supplied into the space 1 of the rotating working wheel 2 through the inlet opening 3. During rotation of the working wheel 2 the fluid to be processed is discharged from the space 1 thereof into the circular chamber 4 formed by the peripheral cylindrical surface 5 of the working wheel 2 and the concentric surface 6 of the stator 7 through a series of the outlet openings 8 arranged along the peripheral cylindrical surface 5 of the working wheel 2 and equidistant along the circumference. Within the limits of the circular chamber 4 the fluid to be processed, continuing rotation relative to the central axis 9 from the free-flow law, is subjected to the action of mechanical vibrations, caused by the interaction with the concentric surface 6 of the stator 7 of elementary fluid flows flowing out of each outlet opening 8 of the working wheel 2. The processed fluid is discharged from the circular chamber 4 through the discharge opening 10.

The radius R of the peripheral cylindrical surface 5 and the frequency of rotation n of the working wheel are determined by the selected number K of the outlet openings 8 of the working wheel 2 in the range according to empirical relationships:

$$R = (1.05 \ ... \ 1.28) \ K \ (mm),$$

$$n = (3.6 \ ...4.1) \ K^{-1.5} \cdot 10^{6} \ (r.p.m).$$

According to the most preferred embodiment of the method of conditioning, the radius R and the frequency of rotation n of the working wheel 2 are determined unambiguously by the selected number K of the outlet openings 8 of the working wheel 2 according to empirical relationships:

$$R = 1.1614 \ K \ (mm),$$

$$n = 3.8396 \ K^{-1.5} \cdot 10^{6} \ (r.p.m.).$$

According to another preferred embodiment (FIG. 3, 4) of the method of conditioning, the discharge of the fluid to be processed from the circular chamber **4** formed by the peripheral cylindrical surface **5** of the working wheel **2** and the concentric surface **6** of the stator **7** is effected through one, several or a series of the discharge openings **11** made on the concentric surface **6** of the stator **7**. Said discharge openings **11** of the circular chamber **4** during rotation of the working wheel **2** are sequentially arranged opposite to the corresponding outlet openings **8** of the working wheel **2**, causing periodical disturbances of flow and corresponding mechanical vibrations in the fluid. The fluid passed through the discharge openings of the circular chamber **4** enters the space **12** of the stator **7**, wherefrom the processed fluid is let out through the discharge opening **13**.

The number of the discharge openings **11** of the circular chamber **4** is selected in the range of one to **K**, whereat it is taken into account that with the increase of the number of the discharge openings **11**, all other things being equal, the process volumetric capacity increases adequately, but the efficiency of conditioning decreases from the point of view of the problem being solved by the invention.

According to the basic embodiment (FIG. 1, 2) of the device for effecting the described method of conditioning, it comprises a rotor **14**, containing a shaft **15** running in bearings **16** and **17** and provided with a seal **18**. The rotor **14** comprises at least one working wheel **2** connected to the shaft **15** and made as a disc **19** with a peripheral annular wall **20**, having a cylindrical outer surface **5**. In said wall **20** a series of outlet openings **8** is made for the fluid, equidistant along the circumference.

A stator **7** containing the working wheel **2** is provided with an intake opening **3** for the fluid supply for processing and a discharge opening **10** for letting out the processed fluid. A space **1** for the admission of the fluid to be processed is formed by the disc **19** and the annular wall **20** of the working wheel **2** and the wall **21** adjoining thereto of the stator **7** with the intake opening **3**. A circular chamber **4** for admission of the fluid to be processed is restricted in the radial direction with the annular wall **20** of the working wheel **2** and the concentric wall **22** of the stator **7** and communicates with the discharge opening **10** for letting out the processed fluid.

The characteristic geometric dimensions of the working wheel **2** and of the circular chamber **4** constitute:

$$R = (1.05 \ldots 1.28) \, K \, (mm),$$

$$\Delta R = (1.05 \ldots 1.28) \, B \, (mm), \text{ where}$$

**K** is the selected number of the outlet openings of the working wheel,
**R** is the radius of the cylindrical outer surface of the peripheral annular wall of the working wheel,
**B** is the selected integer in the range of 1 ... K/2,
**ΔR** is the radial size of the annular chamber.

In the most preferred embodiment (FIG. 1, 2) of the device for conditioning the nominal value of the radius **R** constitutes unambiguously

$$R = 1.1614 \, K \, (mm),$$

while the nominal radial size **ΔR** constitutes

$$\Delta R = 1.1614 \, B \, (mm), \text{ where}$$

**B** is the selected integer in the range of 1 ... K/5.

According to another preferred embodiment (FIG. 3, 4) of the device for conditioning the stator **7** has the space **12**, adjoining the concentric wall **22** thereof to receive the fluid from the circular chamber **4** communicating with the discharge opening **13** for discharging the processed fluid. The space **12** of the stator **7** communicates with the circular wall **4** through the discharge openings **11** for discharging the fluid from the circular chamber **4** and simultaneously for letting it into the space **12**, said discharge openings being made in the concentric wall **22** of the stator **7**. Said discharge openings **11** lie in the arrangement plane of a series of the outlet openings **8** of the working wheel **2** and are equidistant along the circumference. The number of the openings **11** constitutes from one to **K**, their number exceeding **K** being not advantageous due to a marked decrease, all other things being equal, of the intensity of oscillating process.

The rotor **14** is connected through the medium of the shaft **15** and coupling **23** to a driving means thereof with a calculated rotation frequency, such as the electric motor **24**.

The rotor may comprise several working wheels fitted on one shaft, said working wheels being connected sequentially along the fluid flow. Each working wheel can be equipped with vanes.

Provision can be made of the inner or outer by-pass channel with a shut-off-and-control member for reversing a portion of the processed fluid from the outlet of the device to the input thereof for repeated processing.

The device as a whole can occupy any position in space.

The number **K** of the outlet openings **8** of the working wheel **2** is selected basing on the desired frequency of forced vibrations excited in the fluid in the sonic range, which is determined by empirical relationship

$$F = 63.993 \ K^{-0.5} \ (kHz),$$

taking into account the achievable and advantageous geometric dimensions of the device as a whole.

The value of parameter **B** is selected in the above-mentioned ranges, depending on physical properties of a particular fluid to be processed, especially on viscosity and nature of change during heating, taking into account reasonable geometric dimensions of the device as a whole.

The number of the discharge openings **11** for fluid letting out from the circular chamber **4** is selected depending on the desirable ratio of volumetric capacity and tolerable degree of conditioning.

The width of the outlet openings **8** of the working wheel **2** in the circumferential direction along the peripheral surface **5** thereof constitutes preferably 1/2 of their circumferential pitch along the circumference of radius **R**. The width of the discharge openings **11** of the circular chamber **4** in the circumferential direction alone the concentric surface **6** thereof, irrespective of their number, should not exceed preferably that of the outlet openings **8**. The shape of the openings **8** and **11**, as shown in the drawings of FIG. 1 and 3, is preferred uniform, extended in the direction parallel to the central axis **9**.

The device for conditioning, according to the invention, operates as follows:

In the basic and most preferred embodiments of the device (FIG. 1, 2) the fluid to be processed is supplied through the intake opening **3** into the space **1** of the working wheel **2** in the direction shown by the arrow. The rotor **14** together with the working wheel **2** is set into rotation with the help of the electric motor **24** via the coupling **23** and the shaft **15** with calculated rotation frequency **n**. In this case the fluid entering the space **1** of the working wheel **2** under pressure leaves the space **1** through a series of the outlet openings **8** made in the peripheral annular wall **20** of the working wheel **2**, entering the circular chamber **4** limited with the annular wall **20** of the working wheel **2** and the concentric wall **22** of the stator **7**. From the circular chamber **4** the processed fluid is discharged for further processing by fractioning through the discharge opening **10** in the direction shown by the arrow.

In another preferred embodiment the device (FIG. 3, 4) operates similarly to that described above, with the exception that the fluid to be processed leaves the circular chamber **4** and enters the space **12** of the stator **7** through the discharge openings **11** made in the concentric wall **22** of the stator **7**. From the space **12** the processed fluid is supplied for further processing with the aim of fractioning through the discharge opening **13** in the direction shown by the arrow.

Below are given particular examples of practical embodiment, according to the invention, of the method of conditioning and device for embodiment thereof (tables 1 and 2). In this case the efficiency of conditioning means relative increase of the output of light fractions (gasoline, kerosene, diesel fuel) when fractioning of the initial hydrocarbon fluid. In the given examples the efficiency of conditioning is determined by recalculation to initial hydrogen stock (raw petroleum) of additional extraction of light fractions from fuel oil subjected to distillation after conditioning, carried out according to the invention.

Table 1

| Example of Embodiment According to FIG. 1, 2.<br>Processed Fluid - Fuel Oil | | | |
|---|---|---|---|
| Name | Symbol | Unit | Value |
| Number of working wheel outlet openings | K | pcs | 120 |
| Radius of working wheel peripheral cylindrical surface | R | mm | 140.0 |
| | | in. | 5.512 |
| Radial size of circular chamber | ΔR | mm | 9.3 |
| | | in. | 0.366 |
| Working wheel rotation frequency | n | r.p.m. | 2920 |
| Mechanical vibration frequency | F | kHz | 5.840 |
| Energy supplied | E | MJ | 46.8 |
| Capacity at open circulation | G | kg/min | 64.0 |
| Efficiency of conditioning at open circulation | - | % | 1.3 |
| Capacity at 50% enclosed circulation | G1 | kg/min | 32.0 |
| Efficiency of conditioning at 50% enclosed circulation | - | % | 2.5 |

Table 2

| Example of Embodiment According to FIG. 3, 4.<br>Processed Fluid - Fuel Oil | | | |
|---|---|---|---|
| Name | Symbol | Unit | Value |
| Number of working wheel outlet openings | K | pcs | 192 |
| Radius of working wheel peripheral cylindrical surface | R | mm | 223.0 |
| | | in. | 8.780 |
| Radial size of circular chamber | R | mm | 41.8 |
| | | in. | 1.646 |
| Working wheel rotation frequency | n | r.p.m. | 1440 |
| Mechanical vibration frequency | F | kHz | 4.620 |
| Number of circular chamber outlet openings | K1 | pcs | 128 |
| Energy supplied | E | MJ | 64.8 |
| Capacity at open circulation | G | kg/min | 102.8 |
| Efficiency of conditioning at open circulation | - | % | 1.15 |
| Capacity at 50% enclosed circulation | G1 | kg/min | 51.4 |
| Efficiency of conditioning | - | % | 2.30 |

INDUSTRIAL APPLICABILITY

The field of industrial application of the invention covers the chemical, petroleum and other branches of industry, associated with technological processing of hydrocarbon fluids - both the initial raw stock and intermediary products of processing - with the aim of conditioning them before subsequent fractioning. Preliminary conditioning can be used, according to the invention, in particular, for crude oil before distillation, fuel oil before repeated distillation or cracking, gas oil before catalytic cracking, naphta before reforming, etc, as well as artificial hydrocarbon fluids before corresponding fractioning. Integration of the process corresponding to the invention is possible into traditional technological chains of fractioning at a rational combination with transfer operations of hydrocarbon fluids between technological components.

The working wheel can be actuated by means of either a motor specially designed for similar purposes (electric, hydraulic, wind, mechanical, etc), or of rotating parts of transport facilities for the transportation of hydrocarbon fluids.

## Claims

1. A method of conditioning of hydrocarbon fluids by processing with the help of mechanical action, comprising

   (1) supply of the fluid to be processed into a space of a rotating working wheel,
   (2) discharge of the fluid to be processed from the space of the working wheel into a circular chamber formed by the peripheral cylindrical surface of said working wheel and the concentric surface of a stator, at which
   (3) said discharge is effected through a series of outlet openings arranged on the peripheral cylindrical surface of the working wheel and equidistant along the circumference,
   (4) discharge of the fluid from said circular chamber through at least one discharge opening, at which
   (5) radius $R$ of the peripheral cylindrical surface of the working wheel is determined by selected number $K$ of the outlet openings of said working wheel according to empirical relationship

   $$R = (1.05 \ldots 1.28) \, K \, (mm),$$

   (6) rotation frequency $n$ of the working wheel is determined by said value $K$ according to empirical relationship

   $$n = (3.6 \ldots 4.1) \, K^{-1.5} \cdot 10^6 \, (r.p.m.).$$

2. The method of conditioning of hydrocarbon fluids according to claim 1, wherein radius $R$ of the peripheral cylindrical surface of the working wheel is determined by the selected number $K$ of the outlet openings of said working wheel according to empirical relationship

   $$R = 1.1614 \, K \, (mm),$$

   while the rotation frequency $n$ of the working wheel is determined by the value $K$ according to empirical relationship

   $$n = 3.8396 \, K^{-1.5} \cdot 10^6 \, (r.p.m.).$$

3. The method of conditioning of hydrocarbon fluids according to claim 2, wherein the discharge of the fluid from the circular chamber formed by the peripheral cylindrical surface of the working wheel and the concentric surface of the stator is effected through the discharge openings arranged on the concentric surface of the stator, said discharge openings during rotation of the working wheel sequentially oppose the outlet openings of the working wheel.

4. A device for conditioning of hydrocarbon fluids by processing with the help of mechanical action, comprising

(1) a rotor containing a shaft running in bearings,

(2) at least one working wheel, connected to a shaft and made as a disc with a peripheral annular wall having a cylindrical outer surface, wherein a series of outlet openings is made for the fluid equidistant along the circumference,

(3) a stator containing the working wheel, having an intake opening for supply and a discharge opening for discharge of the fluid,

(4) a space for the fluid to be processed formed by the disc and the annular wall of the working wheel and a stator wall with an intake opening adjoining said wheel,

(5) a circular chamber for the fluid to be processed, which is restricted in the radial direction by the peripheral annular wall of the working wheel and the stator concentric wall, and communicates with the discharge opening for discharge of the fluid,

at which the characteristic geometric dimensions of the working wheel and the circular chamber constitute:

(6) radius **R** of the cylindrical outer surface of the peripheral annular wall of the working wheel

$$R = (1.05 \dots 1.28) \ K \ (mm), \ where$$

**K** is the selected number of the outlet openings of the working wheel,

(7) radial size **R** of the circular chamber

$$R = (1.05 \dots 1.28) \ B \ (mm), \ where$$

**B** is the selected integer in the range of 1 ... K/2,

(8) means for driving the rotor at the calculated rotation frequency.

5. The device for conditioning of hydrocarbon fluids according to claim 4, wherein the radius **R** of the cylindrical outer surface of the peripheral annular wall of the working wheel constitutes

$$R = 1.1614 \ K \ (mm), \ where$$

**K** is the selected number of the outlet openings of the working wheel, while the radial size Δ**R** of the circular chamber constitutes

$$\Delta R = 1.1614 \ B \ (mm), \ where$$

**B** is the selected integer in the range of 1 ... K/5.

6. The device for conditioning of hydrocarbon fluids according to claim 5, wherein

(1) the stator has a space adjoining the concentric wall thereof for the fluid intake from the circular chamber, said space communicating with the discharge opening for discharge of the fluid, at which

(2) the stator space communicates with the circular chamber through the discharge openings, made in the stator concentric wall in the arrangement plane of the outlet openings of the working wheel and equidistant along the circumference,

(3) the number of the discharge openings of the circular chamber constitutes 1 ... K.

**Amended claims**

1. A method of conditioning of hydrocarbon fluids by processing with the help of mechanical action, comprising

(1) supply of the fluid to be processed into a space of a rotating working wheel,
(2) discharge of the fluid to be processed from the space of the working wheel into a circular chamber formed by the peripheral surface of said working wheel and the concentric surface of a stator, at which
(3) said discharge is effected through a series of outlet openings arranged on the peripheral surface of the working wheel and equidistant along the circumference,
(4) discharge of the fluid from said circular chamber is effected through at least one discharge opening, at which
(5) radius **R** of the peripheral surface of the working wheel is determined by selected number **K** of the outlet openings of said working wheel according to empirical relationship

$$R = (1.05 \ldots 1.28) \, K \, (mm), \text{ while}$$

(6) rotation frequency **n** of the working wheel is determined by said value **K** according to empirical relationship

$$n = (3.6 \ldots 4.1) \, K^{-1.5} \cdot 10^{6} \, (r.p.m.).$$

2. The method of conditioning of hydrocarbon fluids according to claim 1, wherein radius **R** of the peripheral surface of the working wheel is determined nominally by the selected number **K** of the outlet openings of said working wheel according to empirical relationship

$$R = 1.1614 \, K \, (mm),$$

while the rotation frequency **n** of the working wheel is determined nominally by the value **K** according to empirical relationship

$$n = 3.8396 \, K^{-1.5} \cdot 10^{6} \, (r.p.m.).$$

3. The method of conditioning of hydrocarbon fluids according to claims 1 or 2, wherein the discharge of the fluid from the circular chamber formed by the peripheral surface of the working wheel and the concentric surface of the stator is effected through the discharge openings arranged on the concentric surface of the stator, said discharge openings during rotation of the working wheel sequentially oppose the outlet openings of the working wheel.

4. A device for conditioning of hydrocarbon fluids by processing with the help of mechanical action, comprising

(1) a rotor containing a shaft running in bearings, and
(2) at least one working wheel, connected to a shaft and made as a disc with a peripheral annular wall, wherein a series of outlet openings is made for the fluid, equidistant along the circumference, and
(3) a stator containing the working wheel, having an intake opening for supply and a discharge opening for discharge of the fluid, as well as

(4) a space for the fluid to be processed communicating with a stator intake opening, and

(5) a circular chamber for the fluid to be processed, which is restricted in the radial direction by the peripheral annular wall of the working wheel and the stator concentric wall, and communicates with the discharge opening for discharge of the fluid,

at which the characteristic geometric dimensions of the working wheel and the circular chamber constitute:

(6) radius **R** of the outer surface of the peripheral annular wall of the working wheel

$$R = (1.05 \ldots 1.28) \ K \ (mm), \ where$$

**K** is the selected number of the outlet openings of the working wheel,

(7) radial size $\Delta$**R** of the circular chamber

$$\Delta R = (1.05 \ldots 1.28) \ B \ (mm), \ where$$

**B** is the selected integer in the range of 1 ... K/2, and

(8) a means for driving the rotor at the calculated rotation frequency.

5. The device for conditioning of hydrocarbon fluids according to claim 4, wherein the radius **R** of the outer surface of the peripheral annular wall of the working wheel constitutes nominally

$$R = 1.1614 \ K \ (mm), \ where$$

**K** is the selected number of the outlet openings of the working wheel, while the radial size $\Delta$**R** of the circular chamber constitutes nominally

$$\Delta R = 1.1614 \ B \ (mm), \ where$$

**B** is the selected integer in the range of 1 ... K/5.

6. The device for conditioning of hydrocarbon fluids according to claims 4 or 5, wherein

(1) the stator has a space for the fluid intake from the circular chamber, said space communicating with the discharge opening for discharge of the fluid, at which

(2) the stator space communicates with the circular chamber through the discharge opening, made in the stator concentric wall in the arrangement plane of the series of the outlet openings of the working wheel and equidistant along the circumference, while

(3) the number of the discharge openings of the circular chamber constitutes 1 ... K.

FIG. 1

FIG. 3

FIG. 2

FIG. 4

<table>
<tr><td colspan="2" align="center">**INTERNATIONAL SEARCH REPORT**</td><td>International application No.<br><br>PCT/RU95/00071</td></tr>
</table>

**A. CLASSIFICATION OF SUBJECT MATTER**

IPC6 : B01J 19/00

According to International Patent Classification (IPC) or to both national classification and IPC

**B. FIELDS SEARCHED**

Minimum documentation searched (classification system followed by classification symbols)

IPC6 : B01J 19/00, B01D 17/00-17/04, B01F 3/00

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | SU, A, 497028 (UFIMSKIY NEFTYANOY INSTITUT et al.) 10 March 1976 (10.03.76) | 1-3, 4-6 |
| A | SU, A, 1047491 (UFIMSKIY NEFTYANOY INSTITUT) 15 October 1983 | 1-3, 4-6 |
| A | SU, A, 986475 (UFIMSKIY NEFTYANOY INSTITUT) 7 January 1983 (07.01.83) | 1-3, 4-6 |
| A | EP, A2, 0302386 (FRAU S.p.A.) 08 February 1989 (08.02.89), abstract, fig. 1 | 1-3, 4-6<br>1-3 |
| A | DE, A1, 2453555 (SOCIETE GENERALE DE CONSTRUCTIONS ELECTRIQUES et MECANIQUES ALSTHOM), 15 May 1975 (15.05.75), claims, fig. 1 | 1-3, 4-6 |
| A | FR, A1, 2449467 (SAGET PIERRE, LAURENT), 19 September 1980 (19.09.80) | 1-3, 4-6 |

☒ Further documents are listed in the continuation of Box C.  ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 November 1995 (21.11.95) | 14 December 1995 (14.12.95) |

| Name and mailing address of the ISA/<br><br>ISA/RU<br>Facsimile No. | Authorized officer<br><br><br>Telephone No. |
|---|---|

Form PCT/ISA/210 (second sheet) (July 1992)